# EUROPEAN PATENT SPECIFICATION

(11) **EP 2 222 722 B1**
(45) Date of publication and mention of the grant of the patent: **30.11.2011**
(21) Application number: 08864522.1
(22) Date of filing: 16.12.2008
(51) Int. Cl.: C08F 10/00, C08F 4/70

(54) **PHENANTROLINE-COMPRISING COMPLEXES**
PHENANTROLINHALTIGE KOMPLEXE
COMPLEXES COMPRENANT DE LA PHÉNANTHROLINE

(30) Priority: 21.12.2007 EP 07024917; 25.02.2008 US 66941 P
(43) Date of publication of application: 01.09.2010
(73) Proprietor: Basell Polyolefine GmbH, 50389 Wesseling (DE)
(72) Inventor: KÖLLING, Lars, 68163 Mannheim (DE); MIHAN, Shahram, 65812 Bad Soden (DE)
(86) International application number: PCT/EP2008/010668
(87) International publication number: WO 2009/080236

(56) References cited:
- DATABASE CA [Online] CHEMICAL ABSTRACTS SERVICE, COLUMBUS, OHIO, US; SUN, WENHUA ET AL: "Preparation and application of catalyst for oligomerization and polymerization of ethylene" XP002513913 retrieved from STN Database accession no. 2006:1144460 & CN 1 850 339 A (INSTITUTE OF CHEMISTRY, CHINESE ACADEMY OF SCIENCES, PEOP. REP. CHINA) 25 October 2006 (2006-10-25)
- LI, FENG-HUA ET AL LI, FENG-HUA ET AL: "Synthesis, crystal structure and properties of Ni(II) complex with N-ethyl-1,10-phenanthroline-2-methanamine Synthesis, crystal structure and properties of Ni(II) complex with N-ethyl-1,10-phenanthroline-2-methanamine" WUJI HUAXUE XUEBAO ( 2004 ), 20(4), 483-487 CODEN: WHUXEO; ISSN: 1001-4861 WUJI HUAXUE XUEBAO ( 2004 ), 20(4), 483-487 CODEN: WHUXEO; ISSN: 1001-4861, 2004, XP008101756
- BRITOVSEK G J P ET AL: "THE ROLE OF BULKY SUBSTITUENTS IN THE POLYMERIZATION OF ETHYLENE USING LATE TRANSITION METAL CATALYSTS: A COMPARATIVE STUDY OF NICKEL AND IRON CATALYST SYSTEMS" INORGANICA CHIMICA ACTA, ELSEVIER BV, NL, vol. 345, 1 January 2003 (2003-01-01), pages 279-291, XP001197373 ISSN: 0020-1693

## Description

The present invention relates to phenanthroline-comprising complexes of iron, cobalt or nickel, catalyst systems obtained therefrom and their use in the polymerization of olefins.

The use of metallocene catalysts in the polymerization of unsaturated compounds has a great influence on the preparation of polyolefins, since it opens up a route to new types of polyolefinic materials or to materials having improved properties. There is therefore great interest in the development of new families of catalysts for the polymerization of unsaturated compounds in order to obtain better control of the properties of polyolefins or further novel products.

The use of transition metal catalysts comprising late transition metals is of particular interest because of their ability to tolerate heteroatom functions. Transition metal catalysts comprising late transition metals which are suitable for the polymerization of unsaturated compounds are known from the prior art. Catalysts which have been found to be particularly useful here are 1,2-diiminonickel and 2,6-bis(imino)pyridyliron complexes.

WO 98/27124 and WO99/1298 describe 2,6-bis(imino)pyridyliron and 2,6-bis(imino)pyridylcobalt complexes and their use as catalysts in the homopolymerization and copolymerization of ethylene.

WO 00/58320 and WO00/68280 disclose 2,2'-bispyridineimineiron complexes. The complexes catalyze the oligomerization of ethene to form low molecular weight olefins.

Sun describes phenenethrolineimine complexes nickel (J. Organomet Chem. 691, 2006, 4196 ff) and iron (Organomet. 25, 2006, 666 ff) and their use for the oligomerization of olefins.

CN1850339 describes 2-imino-1, 10-phenanthroline complexes of iron cobalt and nickel.

It is an object of the present invention to find complexes having improved activities.

We have accordingly found complexes of the formula I 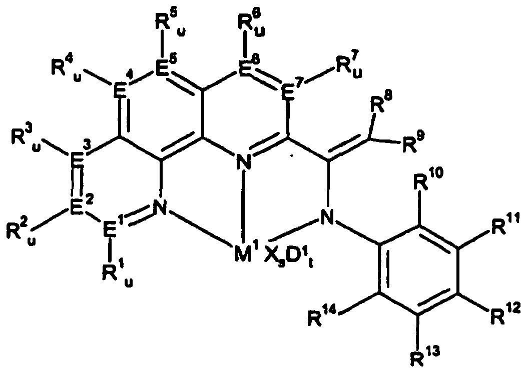 where the variables have the following meanings:
- M¹: is Fe, Co or Ni, preferably Fe,
- R¹-R¹⁴: are each, independently of one another, hydrogen, C₁-C₂₂-alkyl, C₂-C₂₂-alkenyl, C₆-C₂₂-aryl, arylalkyl having from 1 to 10 carbon atoms in the alkyl radical and 6-20 carbon atoms in the aryl radical, NR¹⁵₂, OR¹⁵, halogen or SiR¹⁶₃, where the organic radicals R¹-R¹⁴ may also be substituted by halogens and two adjacent radicals R¹-R¹⁴ may also be joined to form a five- or six-membered ring,
- the radicals R¹⁵: are each, independently of one another, hydrogen, C₁-C₂₂-alkyl, C₂-C₂₂-alkenyl, C₆-C₂₂-aryl, arylalkyl having from 1 to 10 carbon atoms in the alkyl radical and 6-20 carbon atoms in the aryl radical or SiR¹⁶₃, where the organic radicals R¹⁵ may also be substituted by halogens and two radicals R¹⁵ may also be joined to form a five- or six-membered ring,
- the radicals R¹⁶: are each, independently of one another, hydrogen, C₁-C₂₂-alkyl, C₂-C₂₂-alkenyl, C₆-C₂₂-aryl or arylalkyl having from 1 to 10 carbon atoms in the alkyl radical and 6-20 carbon atoms in the aryl radical and two radicals R¹⁶ may also be joined to form a five- or six-membered ring,
- E¹-E⁷: are each, independently of one another, carbon or nitrogen and
- u: is 0 when E¹-E⁷ is nitrogen and is 1 when E¹-E⁷ is carbon,
- the radicals X: are each, independently of one another, fluorine, chlorine, bromine, iodine, hydrogen, C₁-C₁₀-alkyl, C₂-C₁₀-alkenyl, C₆-C₂₀-aryl, arylalkyl having from 1-10 carbon atoms in the alkyl radical and 6-20 carbon atoms in the aryl radical, NR¹⁷₂, OR¹⁷, SR¹⁷, SO₃R¹⁷, OC(O)R¹⁷, CN, SCN, β-diketonate, CO, BF₄⁻, PF₆⁻ or a bulky noncoordinating anion, where the radicals X may be joined to one another,
- the radicals R¹⁷: are each, independently of one another, hydrogen, C₁-C₂₂-alkyl, C₂-C₂₂-alkenyl, C₆-C₂₂-aryl, arylalkyl having from 1 to 10 carbon atoms in the alkyl radical and 6-20 carbon atoms in the aryl radical or SiR¹⁶₃, where the organic radicals R¹⁷ may also be substituted by halogens and two radicals R¹⁷ may also be joined to form a five- or six- membered ring,
- the radicals R¹⁸: are each, independently of one another, hydrogen, C₁-C₂₂-alkyl, C₂-C₂₂-alkenyl, C₆-C₂₂-aryl, arylalkyl having from 1 to 10 carbon atoms in the alkyl radical and 6-20 carbon atoms in the aryl radical, where the organic radicals R¹⁸ may also be substituted by halogens and two radicals R¹⁶ may also be joined to form a five- or six-membered ring,
- D¹: is an uncharged donor and
- s: is 1 or 2,
- t: is from 0 to 4.

The substituents R⁸-R¹⁴ can be varied within wide ranges. Possible carboorganic substituents R⁸-R¹⁴ are, for example, the following: C₁-C₂₂-alkyl which may be linear or branched, e.g. methyl, ethyl, n-propyl, isopropyl, n-butyl, isobutyl, tert-butyl, n-pentyl, n-hexyl, n-heptyl, n-octyl, n-nonyl, n-decyl or n-dodecyl, 5- to 7-membered cycloalkyl which may bear a C₁-C₁₀-alkyl group and/or C₆-C₁₀-aryl group as substituent, e.g. cyclopropane, cyclobutane, cyclopentane, cyclohexane, cycloheptane, cyclooctane, cyclononane or cyclododecane, C₂-C₂₂-alkenyl which may be linear, cyclic or branched and in which the double bond can be internal or terminal, e.g. vinyl, 1-allyl, 2-allyl, 3-allyl, butenyl, pentenyl, hexenyl, cyclopentenyl, cyclohexenyl, cyclooctenyl or cyclooctadienyl, C₆-C₂₂-aryl which may be substituted by further alkyl groups, e.g. phenyl, naphthyl, biphenyl, anthranyl, o-, m-, p-methylphenyl, 2,3-, 2,4-, 2,5- or 2,6-dimethylphenyl, 2,3,4-, 2,3,5-, 2,3,6-, 2,4,5-, 2,4,6- or 3,4,5-trimethylphenyl, or arylalkyl which may be substituted by further alkyl groups, e.g. benzyl, o-, m-, p-methylbenzyl, 1- or 2-ethylphenyl. Possible further radicals R⁸-R¹⁴ are halogens, e.g. fluorine, chlorine or bromine, and also amino NR¹⁵₂, for example dimethylamino, N-pyrrolidinyl or picolinyl, or alkoxy or aryloxy OR¹⁵, e.g. methoxy, ethoxy or isopropoxy, or organosilicon substituents SiR¹⁶₃, e.g. trimethylsilyl, triethylsilyl, butyldimethylsilyl, tributylsilyl, tri-tert-butylsllyl, triallylsilyl, triphenylsilyl or dimethylphenylsilyl.

Possible substituents R¹⁵ are the same carboorganic or organosilicon radicals as described in more detail above for R¹-R⁷, with two radicals R¹⁵ also being able to be joined to form a 5- or 6-membered ring and/or being able to be substituted by halogen. Suitable substituents R¹⁶ are the same carboorganic radicals as described in more detail above for R¹-R⁷, with two radicals R¹⁶ also being able to be joined to form a 5- or 6-membered ring.
If appropriate, two radicals R⁸-R¹⁴, in particular R⁹-R¹⁰, may also be joined to form a five- or six-membered ring which can also be a heterocycle comprising at least one atom from the group consisting of N and O. The organic radicals R⁸-R¹⁴ can also be substituted by halogens such as fluorine, chlorine or bromine.

The radicals R⁸ and R⁹ are each preferably hydrogen, methyl, ethyl, n-propyl, isopropyl, n-butyl, isobutyl, tert-butyl, n-pentyl, n-hexyl, n-heptyl, n-octyl, benzyl or phenyl, in particular hydrogen or methyl.

Preference is given to the radicals R¹¹ and R¹³ each being hydrogen.

Preference is given to the radicals R¹⁰, R¹² and R¹⁴ each being hydrogen, methyl, ethyl, n-propyl, isopropyl, n-butyl, isobutyl, tert-butyl, n-pentyl, n-hexyl, n-heptyl, n-octyl, fluorine, chlorine, bromine, benzyl or phenyl, in particular methyl, chlorine or bromine.

Preferred iron complexes are (2,6-dimethylphenyl)[1-(9-methyl[1,10]phenanthrolin-2-yl)vinyl]amineiron(II) chloride, (2-isopropyl-6-methylphenyl)[1-(9-methyl[1,10]phenanthrolin-2-yl)vinyl]amineiron(II) chloride, (2-bromo-6-methylphenyl)[1-(9-methyl[1,10]phenanthrolin-2-yl)-vinyl]amineiron(II) chloride, (2-chloro-6-methylphenyl)[1-(9-methyl[1,10]phenanthrolin-2-yl)vinyl]amineiron(II) chloride, (2-bromo-6-isopropylphenyl)[1-(9-methyl[1,10]phenanthrolin-2-yl)vinyl]amineiron(II) chloride, (2-chloro-6-isopropylphenyl)[1-(9-methyl[1,10]phenanthrolin-2-yl)vinyl]amineiron(II) chloride, (2,6-diisopropylphenyl)[1-(9-methyl[1,10]phenanthrolin-2-yl)vinyl]amineiron(II) chloride, (2,6-dibromophenyl)[1-(9-methyl[1,10]phenanthrolin-2-yl)vinyl]amineiron(II) chloride, (2-bromo-6-chlorophenyl)[1-(9-methyl[1,10]phenanthrolin-2-yl)vinyl]amineiron(II) chloride, (2,6-dichlorophenyl)[1-(9-methyl[1,10]phenanthrolin-2-yl)vinyl]amineiron(II) chloride, (2-chloro-6-bromophenyl)[1-(9-methyl[1,10]phenanthrolin-2-yl)vinyl]amineiron(II) chloride, (2,6-dimethylphenyl)[1-(9-isopropyl[1,10]phenanthrolin-2-yl)vinyl]amineiron(II) chloride, (2-isopropyl-6-methylphenyl)[1-(9-isopropyl[1,10]phenanthrolin-2-yl)vinyl]amineiron(II) chloride, (2-bromo-6-methylphenyl)[1-(9-isopropyl[1,10]phenanthrolin-2-yl)vinyl]amineiron(II) chloride, (2-chloro-6-methylphenyl)[1-(9-isopropyl[1,10]phenanthrolin-2-yl)vinyl]amineiron(II) chloride, (2-bromo-6-isopropylphenyl)[1-(9-isopropyl[1,10]phenanthrolin-2-yl)vinyl]amineiron(II) chloride, (2-chloro-6-isopropylphenyl)[1-(9-isopropyl[1,10]phenanthrolin-2-yl)vinyl]amineiron(II) chloride, (2,6-diisopropylphenyl)[1-(9-isopropyl[1,10]phenanthrolin-2-yl)vinyl]amineiron(II) chloride, (2,6-dibromophenyl)[1-(9-isopropyl[1,10]phenanthrolin-2-yl)vinyl]amineiron(II) chloride, (2-bromo-6-chlorophenyl)[1-(9-isopropyl[1,10]phenanthrolin-2-yl)vinyl]amineiron(II) chloride, (2,6-dichlorophenyl)[1-(9-isopropyl[1,10]phenanthrolin-2-yl)vinyl]amineiron(II) chloride, (2-chloro-6-bromophenyl)[1-(9-isopropyl[1,10]phenanthrolin-2-yl)vinyl]amineiron(II) chloride, (2,6-dimethylphenyl)[1-(9-bromo[1,10]phenanthrolin-2-yl)vinyl]amineiron(II) chloride, (2-isopropyl-6-methylphenyl)[1-(9-bromo[1,10]phenanthrolin-2-yl)vinyl]amineiron(II) chloride, (2-bromo-6-methylphenyl)[1-(9-bromo[1,10]phenanthrolin-2-yl)vinyl]amineiron(II) chloride, (2-chloro-6-methylphenyl)(1-(9-bromo[1,10]phenanthrolin-2-yl)vinyl]amineiron(II) chloride, (2-bromo-6-isopropylphenyl)[1-(9-bromo[1,10]phenanthrolin-2-yl)vinyl]amineiron(II) chloride, (2-chloro-6-isopropylphenyl)[1-(9-bromo[1,10]phenanthrolin-2-yl)vinyl]amineiron(II) chloride, (2,6-diisopropylphenyl)[1-(9-bromo[1,10]phenanthrolin-2-yl)vinyl]amineiron(II) chloride, (2-bromo-6-chlorophenyl)[1-(9-bromo[1,10]phenanthrolin-2-yl)vinyl]amineiron(II) chloride, (2,6-dichlorophenyl)[1-(9-bromo(1,10]phenanthrolin-2-yl)vinyl]amineiron(II) chloride, (2-chloro-6-bromophenyl)[1-(9-bromo[1,10]phenanthrolin-2-yl)vinyl]amineiron(II) chloride, (2,6-dimethylphenyl)[1-(9-chloro[1,10]phenanthrolin-2-yl)vinyl]amineiron(II) chloride, (2-isopropyl-6-methylphenyl)[1-(9-chloro[1,10]phenanthrolin-2-yl)vinyl]amineiron(II) chloride, (2-bromo-6-methylphenyl)[1-(9-chloro[1,10]phenanthrolin-2-yl)vinyl]amineiron(II) chloride, (2-chloro-6-methylphenyl)[1-(9-chloro[1,10]phenanthrolin-2-yl)vinyl]amineiron(II) chloride, (2-bromo-6-isopropylphenyl)[1-(9-chloro[1,10]phenanthrolin-2-yl)vinyl]amineiron(II) chloride, (2-chloro-6-isopropylphenyl)[1-(9-chloro[1,10]phenanthrolin-2-yl)vinyl]amineiron(II) chloride, (2,6-diisopropylphenyl)[1-(9-chloro(1,10]phenanthrolin-2-yl)vinyl]amineiron(II) chloride, (2,6-dibromophenyl)[1-(9-chloro[1,10]phenanthrolin-2-yl)vinyl]amineiron(II) chloride, (2-bromo-6-chlorophenyl)[1-(9-chloro[1,10]phenanthrolin-2-yl)vinyl]amineiron(II) chloride, (2,6-dichlorophenyl)[1-(9-chloro[1,10]phenanthrolin-2-yl)vinyl]amineiron(II) chloride, (2-chloro-6-bromophenyl)[1-(9-chloro[1,10]phenanthrolin-2-yl)vinyl]amineiron(II) chloride or the corresponding dibromides or tribromides.

The preparation of the complexes can be carried out by methods analogous to those described in J. Am. Chem. Soc. 120, p. 4049 ff. (1998), J. Chem. Soc., Chem. Commun. 1998, 849, WO 98/27124, J. Organomet Chem. 691, 2006, 4196 ff and Organomet. 25, 2006, 666 ff. If an amine (A3) is wanted instead of an imine compound, the imine compound can, for example, be reduced by means of an alkyllithium. Further possibilities are described in EP-A-1117670. The enamides (A2, A4) can be prepared by a method analogous to that described in J. Am. Chem. Soc. 127, 13019-13929.

Furthermore, we have found that the complexes of the formula I or IA of the invention are suitable as catalysts for the polymerization of olefins.

The complexes I or Ia of the invention can be used alone or together with further components as catalyst system for olefin polymerization. Furthermore, we have therefore found catalyst systems for olefin polymerization, comprising at least one complex of the formula I, in particular an iron complex of the formula I, optionally an organic or inorganic support, optionally one or more activators, optionally one or more metal compounds from group 1, 2 or 13 of the Periodic Table and optionally further catalysts suitable for olefin polymerization.

The complex I sometimes has only little polymerization activity on its own and can then be brought into contact with one or more activators in order to be able to display good polymerization activity. Furthermore, the catalyst system therefore optionally comprises one or more activating compounds, preferably one or two activating compounds.

The activator or activators can in each case be used in any amounts relative to the complex I; they are preferably used in excess or in stoichiometric amounts. The amount of activating compound(s) to be used depends on the type of activator. The molar ratio of complex I to activating compound is usually in the range from 1:0.1 to 1:10000, preferably from 1:1 to 1:2000. Suitable activators are, for example, compounds such as an aluminoxane, a strong uncharged Lewis acid, an ionic compound having a Lewis-acid cation or an ionic compound having a Brönsted acid as cation.

As aluminoxanes, it is possible to use, for example, the compounds described in WO 00/31090. Particularly useful aluminoxanes are open-chain or cyclic aluminoxane compounds of the general formulae (X) or (XI) 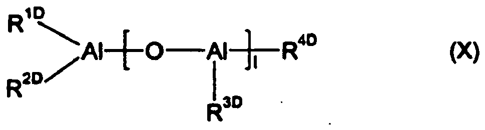 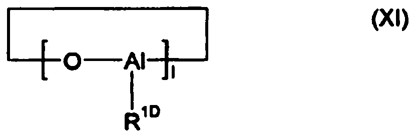 where
- R^{1D}-R^{4D}: are each, independently of one another, a C₁-C₆-alkyl group, preferably a methyl, ethyl, butyl or isobutyl group, and I is an integer from 1 to 40, preferably from 4 to 25.

A very particularly suitable aluminoxane compound is methylaluminoxane.

These oligomeric aluminoxane compounds are usually prepared by controlled reaction of a solution of trialkylaluminum, in particular trimethylaluminum, with water. In general, the oligomeric aluminoxane compounds obtained in this way are in the form of mixtures of both linear and cyclic chain molecules of various lengths, so that I is to be regarded as an average value. The aluminoxane compounds can also be present in admixture with other metal alkyls, usually aluminum alkyls. Aluminoxane preparations suitable as activators are commercially available.

Furthermore, modified aluminoxanes in which some of the hydrocarbon radicals have been replaced by hydrogen atoms or alkoxy, aryloxy, siloxy or amide radicals can also be used as activator in place of the aluminoxane compounds of the general formulae (X) or (XI).

It has been found to be advantageous to use the complex I, in particular the iron complex I, and the aluminoxane compounds in such amounts that the atomic ratio of aluminum from the aluminoxane compounds including any aluminum alkyl still comprised to the metal M¹ from the complex I is usually in the range from 1:1 to 2000:1, preferably from 10:1 to 500:1 and in particular in the range from 20:1 to 400:1.

A further type of suitable activators are hydroxyaluminoxanes. These can be prepared, for example, by addition of from 0.5 to 1.2 equivalents of water, preferably from 0.8 to 1.2 equivalents of water, per equivalent of aluminum of an alkylaluminum compound, in particular triisobutylaluminum, at low temperatures, usually below 0°C. Such compounds and their use in olefin polymerization are described, for example, in WO 00/24787. The atomic ratio of aluminum from the hydroxyaluminoxane compound to the metal M¹ from the complex I is usually in the range from 1:1 to 100:1, preferably from 10:1 to 50:1 and in particular in the range from 20:1 to 40:1.

As strong, uncharged Lewis acids, preference is given to compounds of the general formula (XII)

M^{2D}X^{1D}X^{2D}X^{3D} (XII)

where
- M^{2D}: is an element of group 13 of the Periodic Table of the Elements, in particular B, Al or Ga, preferably B,
- X^{1D}, X^{2D} and X^{3D}: are each hydrogen, C₁-C₁₀-alkyl, C₆-C₁₅-aryl, alkylaryl, arylalkyl, haloalkyl or haloaryl each having from 1 to 10 carbon atoms in the alkyl radical and from 6 to 20 carbon atoms in the aryl radical or fluorine, chlorine, bromine or iodine, in particular haloaryls, preferably pentafluorophenyl.

Further examples of strong, uncharged Lewis acids are given in WO 00/31090.

Particularly useful activators are boranes and boroxins such as trialkylborane, triarylborane or trimethylboroxin. Particular preference is given to using boranes which bear at least two perfluorinated aryl radicals. Particular preference is given to compounds of the general formula (XII) in which X^{1D}, X^{2D} and X^{3D} are identical, for example triphenylborane, tris(4-fluorophenyl)-borane, tris(3,5-difluorophenyl)borane, tris(4-fluoromethylphenyl)borane, tris(pentafluorophenyl)borane, tris(tolyl)borane, tris(3,5-dimethylphenyl)borane, tris(3,5-difluorophenyl)borane or tris(3,4,5-trifluorophenyl)borane. Preference is given to using tris(pentafluorophenyl)borane.

Suitable activators are preferably prepared by reaction of aluminum or boron compounds of the formula (XII) with water, alcohols, phenol derivatives, thiophenol derivatives or aniline derivatives, with halogenated and especially perfluorinated alcohols and phenols being of particular importance. Examples of particularly useful compounds are pentafluorophenol, 1,1-bis(pentafluorophenyl)methanol and 4-hydroxy-2,2',3,3',4',5,5',6,6'-nonafluorobiphenyl. Examples of combinations of compounds of the formula (XII) with Brönsted acids are, in particular, trimethylaluminum/pentafluorophenol, trimethylaluminum/1-bis(pentafluorophenyl)methanol, trimethytaluminum/4-hydroxy-2,2',3,3',4',5,5',6,6'-nonafluorobiphenyl, triethylaluminum/pentafluorophenol or triisobutylaluminum/pentafluorophenol and triethylaluminum/4,4'-dihydroxy-2,2'.3,3',5,5',6,6'-octafluorobiphenyl hydrate.

In further suitable aluminum and boron compounds of the formula (XII), R^{1D} is an OH group, as, for example, in boronic acids and borinic acids. Particular mention may be made of borinic acids having perfluorinated aryl radicals, for example (C₆F₅)₂BOH.

Strong uncharged Lewis acids suitable as activators also include the reaction products of a boronic acid with two equivalents of an aluminum trialkyl or the reaction products of an aluminum trialkyl with two equivalents of an acidic fluorinated, in particular perfluorinated, carbon compound such as pentafluorophenol or bis(pentafluorophenyl)borinic acid.

Suitable ionic compounds having Lewis-acid cations include salt-like compounds of the cation of the general formula (XIII)

[((M^{3D})^{a+})Q₁Q₂...Q_{z}]^{d+} (XIII)

where
- M^{3D}: is an element of groups 1 to 16 of the Periodic Table of the Elements,
- Q₁ to Q_{z}: are singly negatively charged groups such as C₁-C₂₈-alkyl, C₆-C₁₅-aryl, alkylaryl, arylalkyl, haloalkyl, haloaryl each having from 6 to 20 carbon atoms in the aryl radical and from 1 to 28 carbon atoms in the alkyl radical, C₃-C₁₀-cycloalkyl which may bear C₁-C₁₀-alkyl groups as substituents, halogen, C₁-C₂₈-alkoxy, C₆-C₁₅-aryloxy, silyl or mercaptyl groups,
- a: is an integer from 1 to 6 and
- z: is an integer from 0 to 5,
- d: corresponds to the difference a-z, but d is greater than or equal to 1.

Particularly useful cations are carbonium cations, oxonium cations and sulfonium cations and also cationic transition metal complexes. Particular mention may be made of the triphenylmethyl cation, the silver cation and the 1,1'-dimethylferrocenyl cation. They preferably have noncoordinating counterions, in particular boron compounds as are also mentioned in WO 91/09882, preferably tetrakis(pentafluorophenyl)borate.

Salts having noncoordinating anions can also be prepared by combining a boron or aluminum compound, e.g. an aluminum alkyl, with a second compound which can react to link two or more boron or aluminum atoms, e.g. water, and a third compound which forms an ionizing ionic compound with the boron or aluminum compound, e.g. tnphenylchloromethane, or optionally a base, preferably an organic nitrogen-comprising base, for example an amine, an aniline derivative or a nitrogen heterocycle. In addition, a fourth compound which likewise reacts with the boron or aluminum compound, e.g. pentafluorophenol, can be added.

Ionic compounds having Brönsted acids as cations preferably likewise have noncoordinating counterions. As Brönsted acid, particular preference is given to protonated amine or aniline derivatives. Preferred cations are N,N-dimethylanilinium, N,N-dimethylcylohexylammonium and N,N-dimethylbenzylammonium and also derivatives of the latter two.

Compounds comprising anionic boron heterocycles as are described in WO 9736937 are also suitable as activators, in particular dimethylanilinium boratabenzene or trityl boratabenzene.

Preferred ionic activators comprise borates which bear at least two perfluorinated aryl radicals. Particular preference is given to N,N-dimethylanilinium tetrakis(pentafluorophenyl)borate and in particular N,N-dimethylcyclohexylammonium tetrakis(pentafluorophenyl)borate, N,N-dimethylbenzylammonium tetrakis(pentafluorophenyl)borate or trityl tetrakispentafluorophenylborate.

It is also possible for two or more borate anions to be joined to one another, as in the dianion [(C₆F₅)₂B-C₆F₄-B(C₆F₅)₂]²⁻, or the borate anion to be bound by a bridge to a suitable functional group on the support surface.

Further suitable activators are listed in WO 00/31090.

The amount of strong, uncharged Lewis acids, ionic compounds having Lewis-acid cations or ionic compounds having Brönsted acids as cations is preferably from 0.1 to 20 equivalents, preferably from 1 to 10 equivalents and particularly preferably from 1 to 2 equivalents, based on the complex I.

Suitable activators also include boron-aluminum compounds such as di[bis(pentafluorophenyl)boroxy]methylalane. Examples of such boron-aluminum compounds are those disclosed in WO 99/06414.

It is also possible to use mixtures of all the abovementioned activating compounds. Preferred mixtures comprise aluminoxanes, in particular methylaluminoxane, and an ionic compound, in particular one comprising the tetrakis(pentafluorophenyl)borate anion, and/or a strong uncharged Lewis acid, in particular tris(pentafluorophenyl)borane or a boroxin.

Both the complex I and the activator(s) are preferably used in a solvent, preferably an aromatic hydrocarbon having from 6 to 20 carbon atoms, in particular xylenes, toluene, pentane, hexane, heptane or mixtures thereof.

Furthermore, it is possible to use an activator which can simultaneously be used as support. Such systems are obtained, for example, by treatment of an inorganic oxide with zirconium alkoxide and subsequent chlorination, e.g. by means of carbon tetrachloride. The preparation of such systems is described, for example, in WO 01/41920.

The combinations of the preferred activators with the preferred complexes I are particularly preferred.

Preference is given to using an aluminoxane as activator for the iron complexes I. Preference is also given to the combination of salt-like compounds of the cation of the general formula (XIII), in particular N,N-dimethylanilinium tetrakis(pentafluorophenyl)borate, N,N-dimethylcyclohexylammonium tetrakis(pentafluorophenyl)borate, N,N-dimethylbenzylammonium tetrakis(pentafluorophenyl)borate or trityl tetrakispentafluorophenylborate, as activator for the iron complex I, especially in combination with an aluminoxane.

For the complexes I to be used in the gas phase or in suspension in polymerization processes, it is often advantageous for the complexes to be used in the form of a solid, i.e. they can be applied to a solid support. Furthermore, the supported complexes display a high productivity. The complexes I can therefore optionally be immobilized on an organic or inorganic support and used in supported form in the polymerization. This makes it possible, for example, to avoid deposits in the reactor and to control the polymer morphology. As support materials, preference is given to using silica gel, magnesium chloride, aluminum oxide, mesoporous materials, aluminosilicates, hydrotalcites and organic polymers such as polyethylene, polypropylene, polystyrene, polytetrafluoroethylene or polar functionalized polymers such as copolymers of ethene and acrylic esters, acroleins or vinyl acetate.

Particular preference is given to a catalyst system comprising at least one complex I, in particular an iron complex I, at least one activator and at least one support component.

To produce the catalyst systems of the invention, the complex I and/or the activator are/is preferably immobilized on the support by physisorption or by chemical reaction, i.e. covalent bonding of the components, with reactive groups on the support surface.

The order in which support component, complex I and the activator are combined is in principle immaterial. After the individual process steps, the various intermediates can be washed with suitable inert solvents such as aliphatic or aromatic hydrocarbons.

The complex I and the activator can be immobilized independently of one another, e.g. in succession or simultaneously. Thus, the support component can firstly be brought into contact with the activator or activators or firstly be brought into contact with the complex I. Preactivation of the complex I by means of one or more activators before mixing with the support is also possible. The complex I can also be prepared in the presence of the support material. A further method of immobilization is prepolymerization of the catalyst system with or without prior application to a support.

Immobilization is generally carried out in an inert solvent which can be filtered off or evaporated after immobilization. After the individual process steps, the solid catalyst system can be washed with suitable inert solvents such as aliphatic or aromatic hydrocarbons and dried. However, the use of the supported catalyst system while still moist is also possible.

In a preferred method of preparing the supported catalyst system, at least one complex I, in particular an iron complex I, is brought into contact with at least one activator and subsequently mixed with the dehydrated or passivated support material. The resulting supported catalyst system is subsequently dried to ensure that all or most of the solvent is removed from the pores of the support material. The supported catalyst is preferably obtained as a free-flowing powder. Examples of the industrial implementation of the above process are described in WO 96/00243, WO 98/40419 or WO 00/05277. Preferably the activator is firstly generated or applied on the support component and this supported compound is subsequently brought into contact with the complex I.

The support component is preferably a finely divided support which can be any organic or inorganic solid. In particular, the support component can be a porous support such as talc, a sheet silicate such as montmorillonite, mica, an inorganic oxide or a finely divided polymer powder (e.g. polyolefin or a polymer bearing polar functional groups).

The support materials used preferably have a specific surface area in the range from 10 to 1000 m²/g. a pore volume in the range from 0.1 to 5 mUg and an average particle size of from 1 to 500 µm. Preference is given to supports having a specific surface area in the range from 50 to 700 m²/g, a pore volume in the range from 0.4 to 3.5 mUg and an average particle size in the range from 5 to 350 µm. Particular preference is given to supports having a specific surface area in the range from 200 to 550 m²/g, a pore volume in the range from 0.5 to 3.0 ml/g and an average particle size of from 10 to 150 µm.

The complex I is preferably applied in such an amount that the concentration of metal M¹ from the complex I in the finished catalyst system is from 1 to 200 µmol, preferably from 5 to 100 µmol and particularly preferably from 10 to 70 µmol, per g of finished catalyst system.

The inorganic support can be subjected to a thermal treatment, e.g. to remove adsorbed water. Such a drying treatment is generally carried out at temperatures in the range from 50 to 1000°C, preferably from 100 to 600°C, with drying at from 100 to 200°C preferably being carried out under reduced pressure and/or under a blanket of inert gas (e.g. nitrogen), or the inorganic support can be calcined at from 200 to 1000°C to produce the desired structure of the solid and/or set the desired OH concentration on the surface. The support can also be treated chemically using customary dessicates such as metal alkyls, preferably aluminum alkyls, chlorosilanes or SiCl₄, or else methylaluminoxane. Appropriate treatment methods are described, for example, in WO 00/31090.

The inorganic support material can also be chemically modified. For example, treatment of silica gel with NH₄SiF₆ or other fluorinating agents leads to fluorination of the silica gel surface, or treatment of silica gels with silanes comprising nitrogen-, fluorine- or sulfur-comprising groups leads to correspondingly modified silica gel surfaces. Organic support materials such as finely divided polyolefin powders (e.g. polyethylene, polypropylene or polystyrene) can also be used and should preferably likewise be freed of adhering moisture, solvent residues or other impurities by appropriate purification and drying operations before use. It is also possible to use functionalized polymer supports, e.g. ones based on polystyrene, polyethylene, polypropylene or polybutylene, via whose functional groups, for example ammonium or hydroxyl groups, at least one of the catalyst components can be fixed. Polymer blends can also be used.

Inorganic oxides suitable as support component may be found among the oxides of elements of groups 2, 3, 4, 5, 13, 14, 15 and 16 of the Periodic Table of the Elements. Examples of oxides preferred as supports comprise silicon dioxide, aluminum oxide and mixed oxides of the elements calcium, aluminum, silicon, magnesium or titanium and also corresponding oxide mixtures. Other inorganic oxides which can be used either alone or in combination with the abovementioned preferred oxidic supports are, for example, MgO, CaO, AlPO₄, ZrO₂, TiO₂, B₂O₃ or mixtures thereof.

Further preferred inorganic support materials are inorganic halides such as MgCl₂ or carbonates such as Na₂CO₃, K₂CO₃, CaCO₃, MgCO₃, sulfates such as Na₂SO₄, Al₂(SO₄)₃, BaSO₄, nitrates such as KNO₃, Mg(NO₃)₂ or Al(NO₃)₃.

As solid support materials for catalysts for olefin polymerization, preference is given to using silica gels since particles whose size and structure make them suitable as supports for olefin polymerization can be produced from this material. Spray-dried silica gels comprising spherical agglomerates of smaller granular particles, i.e. primary particles, have been found to be particularly useful. The silica gels can be dried and/or calcined before use.

Further preferred supports are hydrotalcites and calcined hydrotalcites. In mineralogy, hydrotalcite is a natural mineral having the ideal formula

Mg₆Al₂(OH)₁₆CO₃ · 4 H₂O

whose structure is derived from that of brucite Mg(OH)₂. Brucite crystallizes in a sheet structure with the metal ions in octahederal holes between two layers of closely-packed hydroxyl ions, with only every second layer of the octahedral holes being occupied. In hydrotalcite, some magnesium ions are replaced by aluminum ions, as a result of which the stack of layers gains a positive charge. This is compensated by the anions which are located together with water of crystallization in the layers in between.

Such sheet structures are found not only in magnesium-aluminum hydroxides, but also generally in mixed metal hydroxides having a sheet structure of the formula

M(II)₂ₓ²⁺M(III)₂³⁺(OH)₄ₓ₊₄ · A_{2/n}ⁿ⁻ · z H₂O

where M(II) is a divalent metal such as Mg, Zn, Cu, Ni, Co, Mn, Ca and/or Fe and M(III) is a trivalent metal such as Al, Fe, Co, Mn, La, Ce and/or Cr, x is from 0.5 to 10 in steps of 0.5, A is an interstitial anion and n is the charge on the interstitial anion which can be from 1 to 8, usually from 1 to 4, and z is an integer from 1 to 6, in particular from 2 to 4. Possible interstitial anions are organic anions such as alkoxide anions, alkyl ether sulfates, aryl ether sulfates or glycol ether sulfates, inorganic anions such as, in particular, carbonate, hydrogencarbonate, nitrate, chloride, sulfate or B(OH)₄⁻ or polyoxo metal anions such as Mo₇O₂₄⁶⁻ or V₁₀O₂₈⁶⁻. However, a mixture of a plurality of such anions can also be present.

Accordingly, all such mixed metal hydroxides having a sheet structure should be regarded as hydrotalcites for the purposes of the present invention.

Calcined hydrotalcites can be prepared from hydrotalcites by calcination, e.g. heating, by means of which, inter alia, the desired hydroxyl group content can be set. In addition, the crystal structure also changes. The preparation of the calcined hydrotalcites used according to the invention is usually carried out at temperatures above 180°C. Preference is given to calcination for from 3 to 24 hours at temperatures of from 250°C to 1000°C, in particular from 400°C to 700°C. It is possible for air or inert gas to be passed over the solid or for a vacuum to be applied at the same time.

On heating, the natural or synthetic hydrotalcites firstly give off water, i.e. drying occurs. On further heating, the actual calcination, the metal hydroxides are converted into the metal oxides by elimination of hydroxyl groups and interstitial anions; OH groups or interstitial anions such as carbonates can also be comprised in the calcined hydrotalcites. A measure of this is the loss on ignition. This is the weight loss experienced by a sample which is heated in two steps firstly for 30 minutes at 200°C in a drying oven and then for 1 hour at 950°C in a muffle furnace.

The calcined hydrotalcites used as support component are thus mixed oxides of the divalent and trivalent metals M(II) and M(III), with the molar ratio of M(II) to M(III) generally being in the range from 0.5 to 10, preferably from 0.75 to 8 and in particular from 1 to 4. Furthermore, a normal amount of impurities, for example Si, Fe, Na, Ca or Ti and also chlorides and sulfates, can also be comprised.

Preferred calcined hydrotalcites are mixed oxides in which M(II) is magnesium and M(III) is aluminum. Such aluminum-magnesium mixed oxides are obtainable from Condea Chemie GmbH (now Sasol Chemie), Hamburg, under the trade name Puralox Mg.

Preference is also given to calcined hydrotalcites in which the structural transformation is complete or virtually complete. Calcination, i.e. transformation of the structure, can be confirmed, for example, by means of X-ray diffraction patterns.

The hydrotalcites, calcined hydrotalcites or silica gels employed are generally used as finely divided powders having an average particle diameter D50 of from 5 to 200 µm, preferably from 10 to 150 µm, particularly preferably from 15 to 100 µm and in particular from 20 to 70 µm, and usually have pore volumes of from 0.1 to 10 cm³/g, preferably from 0.2 to 5 cm³/g, and specific surface areas of from 30 to 1000 m²/g, preferably from 50 to 800 m²/g and in particular from 100 to 600 m²/g. The complex I is preferably applied in such an amount that the concentration of metal M¹ from the complex I in the finished catalyst system is from 1 to 100 µmol, preferably from 5 to 80 µmol and particularly preferably from 10 to 60 µmol, per g of finished catalyst system.

The catalyst system can additionally comprise, as further component, one or more metal compounds of group 1, 2 or 13 of the Periodic Table, in particular a metal compound of the general formula (XX),

M^{G} (R^{1G})ᵣG(R^{2G})ₛG(R^{3G})ₜG (XX)

where
- M^{G}: is Li, Na, K, Be, Mg, Ca, Sr, Ba, boron, aluminum, gallium, indium, thallium, zinc, in particular Li, Na, K, Mg, boron, aluminum or Zn,
- R^{1G}: is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
- R^{2G} and R^{3G}: are each hydrogen, halogen, C₁-C₁₀-alkyl, C₆-C₁₅-aryl, alkylaryl, arylalkyl or alkoxy each having from 1 to 20 carbon atoms in the alkyl radical and from 6 to 20 carbon atoms in the aryl radical, or alkoxy with C₁-C₁₀-alkyl or C₆-C₁₅-aryl,
- r^{G}: is an integer from 1 to 3 and
- s^{G} and t^{G}: are integers from 0 to 2, with the sum r^{G}+s^{G}+t^{G} corresponding to the valence of M^{G},
where the metal compounds of the formula (XX) are usually not identical to the activator. It is also possible to use mixtures of various metal compounds of the formula (XX).

Among the metal compounds of the general formula (XX), preference is given to those in which
- M^{G}: is lithium, magnesium, boron or aluminum and
- R^{1G}: is C₁-C₂₀-alkyl.

Particularly preferred metal compounds of the formula (XX) are methyllithium, ethyllithium, n-butyllithium, methylmagnesium chloride, methylmagnesium bromide, ethylmagnesium chloride, ethylmagnesium bromide, butylmagnesium chloride, dimethylmagnesium, diethylmagnesium, dibutylmagnesium, n-butyl-n-octylmagnesium, n-butyl-n-heptylmagnesium, in particular n-butyl-n-octylmagnesium, tri-n-hexylaluminum, triisobutylaluminum, tri-n-butylaluminum, triethylaluminum, dimethylaluminum chloride, dimethylaluminum fluoride, methylaluminum dichloride, methylaluminum sesquichloride, diethylaluminum chloride and trimethylaluminum and mixtures thereof. The partial hydrolysis products of aluminum alkyls with alcohols can also be used.

When a metal compound (XX) is used, it is preferably comprised in the catalyst system in such an amount that the molar ratio of M^{G} from formula (XX) to metal M¹ from the complex I is from 3000:1 to 0.1:1, preferably from 800:1 to 0.2:1 and particularly preferably from 100:1 to 1:1.

In general, the metal compound of the general formula (XX) is used as constituent of a catalyst system for the polymerization or copolymerization of olefins. Here, the metal compound (XX) can, for example, be used for producing a catalyst solid comprising the support and/or be added during or shortly before the polymerization. The metal compounds (XX) used can be identical or different. It is also possible, particularly when the catalyst solid does not comprise any activating component, for the catalyst system to comprise one or more activators in addition to the catalyst solid, with these activators being identical to or different from any compounds (XX) comprised in the catalyst solid.

The metal compound (XX) can likewise be reacted in any order with the complex I and optionally the activator and support. The complex 1 can, for example, be brought into contact with the activator(s) and/or the support either before or after being brought into contact with the olefins to be polymerized. Preactivation using one or more activators prior to mixing with the olefin and further addition of the same or other activators and/or the support after the mixture has been brought into contact with the olefin is also possible. Preactivation is generally carried out at temperatures of 10-100°C, preferably 20-80°C.

Preferably a catalyst solid is prepared from an iron complex I, an activator and a support as described above and this is brought into contact with the metal compound (XX) during, at the beginning of or shortly before the polymerization. Preference is given to the metal compound (XX) firstly being brought into contact with the α-olefin to be polymerized and the catalyst solid comprising an iron complex I, an activator and a support as described above subsequently being added.

Preferably, the support is firstly brought into contact with the metal compound (XX) and then with the complex I and any further activator as described above.

The catalyst system can optionally comprise further catalysts suitable for olefin polymerization. Possible catalysts here are, in particular, classical Ziegler-Natta catalysts based on titanium, classical Phillips catalysts based on chromium compounds, in particular chromium oxides, metallocenes, nickel- and palladium-bisimine systems (for the preparation of these, see WO-A-98/03559) and cobalt-pyridinebisimine compounds (for the preparation of these, see WO-A-98/27124).

Preference is given to Ziegler catalyst components (as described, for example in Falbe, J.; Regitz, M. (editors); Römpp Chemie Lexikon; 9th edition; Thieme; 1992; New York; Vol. 6, pp. 5128-5129) and/or metallocene catalyst components. Particular preference is given to metallocene catalyst components.

The Ziegler catalyst component is preferably a compound of a metal of group IVa (e.g. titanium, zirconium or hafnium), Va (e.g. vanadium or niobium) or Via (e.g. chromium or molybdenum) of the Periodic Table of the Elements. Preference is given to halides, oxides, oxyhalides, hydroxides or alkoxides. Examples of Ziegler catalyst components are: titanium tetrachloride, zirconium tetrachloride, hafnium tetrachloride, titanium trichloride, vanadium trichloride, vanadium oxychloride, chromium trichloride and chromium oxide.

For the purposes of the present patent application, metallocene catalyst components are cyclopentadienyl complexes comprising two or three cyclopentadienyl ligands. A cyclopentadienyl ligand is, for the purposes of the present patent application, any system comprising a cyclic 5-ring system having 6 n electrons, for example indenyl or fluorenyl systems. Preference is given to metallocene complexes of metals of group III and the group of the lanthanides (e.g. lanthanum or yttrium) and of metals of group IV (e.g. titanium, zirconium or hafnium), V (e.g. vanadium or niobium) or VI (e.g. chromium or molybdenum) of the Periodic Table of the Elements, with particular preference being given to cyclopentadienyl complexes of titanium, zirconium or hafnium. The cyclopentadienyl complexes can, for example, be bridged or unbridged biscyclopentadienyl complexes as are described, for example, in EP 129 368, EP 561 479, EP 545 304 and EP 576 970 or monocyclopentadienyl complexes such as the bridged amidocyclopentadienyl complexes described, for example, in EP 416 815. Substituted and unsubstituted biscyclopentadienylhafnium dichlorides are particularly preferred.

The molar ratio of complex I, in particular iron complex I, to olefin polymerization catalyst is usually in the range from 1:100 to 100:1, preferably from 1:10 to 10:1 and particularly preferably from 1:5 to 5:1.

It is also possible for the catalyst system firstly to be prepolymerized with α-olefins, preferably linear C₂-C₁₀-1-alkenes and in particular ethylene or propylene, and the resulting prepolymerized catalyst solid then to be used in the actual polymerization. The mass ratio of catalyst solid used in the prepolymerization to monomer to be polymerized on to it is usually in the range from 1:0.1 to 1:1000, preferably from 1:1 to 1:200.

Furthermore, a small amount of an olefin, preferably an α-olefin, for example vinylcyclohexane, styrene or phenyldimethylvinylsilane, as modifying component, an antistatic or a suitably inert compound such as a wax or oil can be added as additive during or after production of the catalyst system. The molar ratio of additives to complex I is in this case usually from 1:1000 to 1000:1, preferably from 1:5 to 20:1.

The catalyst composition of the invention or the catalyst system is suitable for preparing the polyethylene according to the invention which has advantageous use and processing properties.

To prepare polyethylene, ethylene is polymerized either alone or with α-olefins having from 3 to 12 carbon atoms as described above.

In the polymerization process of the invention, ethylene is polymerized either alone or with α-olefins having from 3 to 12 carbon atoms. Preferred α-olefins are linear or branched C₂-C₁₂-1-alkenes, in particular linear C₂-C₁₀-1-alkenes such as ethene, propene, 1-butene, 1-pentene, 1-hexene, 1-heptene, 1-octene, 1-decene or branched C₂-C₁₀-1-alkenes such as 4-methyl-1-pentene. Particularly preferred α-olefins are C₄-C₁₂-1-alkenes, in particular linear C₆-C₁₀-1-alkenes. It is also possible to polymerize mixtures of various α-olefins. Preference is given to polymerizing at least one α-olefin selected from the group consisting of ethene, propene, 1-butene, 1-pentene, 1-hexene, 1-heptene, 1-octene and 1-decene. Preference is given to using monomer mixtures comprising at least 50 mol% of ethene.

The process of the invention for the polymerization of ethylene with α-olefins can be carried out by means of all industrially known polymerization processes at temperatures in the range from -60 to 350°C, preferably from 0 to 200°C. and particularly preferably from 25 to 150°C, and under pressures of from 0.5 to 4000 bar, preferably from 1 to 100 bar and particularly preferably from 3 to 40 bar. The polymerization can be carried out in a known manner in bulk, in suspension, in the gas phase or in a supercritical medium in the customary reactors used for the polymerization of olefins. It can be carried out batchwise or preferably continuously in one or more stages. High-pressure polymerization processes in tube reactors or autoclaves, solution processes, suspension processes, stirred gas-phase processes or gas-phase fluidized-bed processes are all possible.

The polymerizations are usually carried out at temperatures in the range from -60 to 350°C, preferably in the range from 20 to 300°C, and under pressures of from 0.5 to 4000 bar. The average residence times are usually from 0.5 to 5 hours, preferably from 0.5 to 3 hours. The advantageous pressure and temperature ranges for carrying out the polymerizations usually depend on the polymerization methods. In the case of high-pressure polymerization processes which are usually carried out at pressures in the range from 1000 to 4000 bar, in particular from 2000 to 3500 bar, high polymerization temperatures are generally also set. Advantageous temperature ranges for these high-pressure polymerization processes are from 200 to 320°C, in particular from 220 to 290°C. In the case of low-pressure polymerization processes, a temperature which is at least a few degrees below the softening temperature of the polymer is generally set. In particular, temperatures in the range from 50 to 180°C, preferably from 70 to 120°C, are set in these polymerization processes. In the case of suspension polymerizations. polymerization is usually carried out in a suspension medium, preferably in an inert hydrocarbon such as isobutane or a mixture of hydrocarbons or else in the monomers themselves. The polymerization temperatures are generally in the range from -20 to 115°C, and the pressure is generally in the range from 1 to 100 bar. The solids content of the suspension is generally in the range from 10 to 80%. The polymerization can be carried out batchwise, e.g. in stirring autoclaves, or continuously, e.g. in tube reactors, preferably loop reactors. Particular preference is given to employing the Phillips PF process as described in US-A 3 242 150 and US-A 3 248179. The gas-phase polymerization is generally carried out in the range from 30 to 125°C at pressures of from 1 to 50 bar.

Among the polymerization processes mentioned, particular preference is given to gas-phase polymerization, in particular in gas-phase fluidized-bed reactors, solution polymerization and suspension polymerization, in particular in loop reactors and stirred tank reactors. The gas-phase polymerization can also be carried out in the condensed or supercondensed mode, in which part of the circulating gas is cooled to below the dew point and is recirculated as a two-phase mixture to the reactor. It is also possible to use a multizone reactor in which two polymerization zones are linked to one another and the polymer is passed alternately through these two zones a number of times. The two zones can also have different polymerization conditions. Such a reactor is described, for example, in WO 97/04015. The different or identical polymerization processes can also, if desired, be connected in series so as to form a polymerization cascade, for example as in the Hostalen® process. A parallel reactor arrangement using two or more identical or different processes is also possible.

Furthermore, molar mass regulators, for example hydrogen, or customary additives such as antistatics can also be used in the polymerizations. Furthermore, we have therefore found a process for the polymerization of ethylene either alone or together with α-olefins in the presence of a catalyst system for olefin polymerization, comprising at least one complex of the formula I, in particular an iron complex of the formula I, optionally an organic or inorganic support, optionally one or more activators, optionally one or more metal compounds from the group 1, 2 or 13 of the Periodic Table and optionally further catalysts suitable for olefin polymerization, with the polymerization being carried out in the presence of hydrogen.

The polymerization is preferably carried out in a single reactor, in particular in a gas-phase reactor.

The unsymmetrical complexes according to the invention are very active in the polymerization of ethylene. The activities achieved using them are higher than the activities achieved using the corresponding 2,2'-bipyridineimineiron complexes and the corresponding 2,6-pyridinebisimine complexes. Furthermore, the ethylene polymers obtained in this way have narrower molar mass distributions and higher average molar masses than the ethylene polymers obtained by catalysis by 2,2'-bipyridineimineiron complexes.

### Examples

### Example 1:

### 1.1. Preparation of 1-methyl-1H[1,10]phenanthrolin-2-one

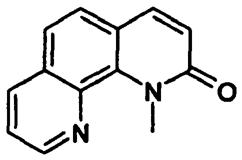

A mixture of 18.50 g (0.103 mol) of [1,10]phenanthroline and 50 ml of dimethyl sulfate was heated at 120°C for one hour. After cooling to room temperature, the mixture was added to 300 ml of absolute diethyl ether while stirring. The white precipitate (23.39 g) was used without further purification.

A solution of 80 g (2.000 mol) of sodium hydroxide in 300 ml of water and the white solid obtained above in 300 ml of water were added alternately in small portions to a solution of 53.00 g (0.161 mol) of potassium hexacyanoferrate(III) in 150 ml of water at 0°C. The precipitate obtained was admixed with 150 ml of toluene and refluxed for 30 minutes. Distilling of the solvent under reduced pressure gave 15.01 g (0.071 mol) of 1-methyl-1H[1,10]phenanthrolin-2-one in a yield of 69%.

### 1.2. Preparation of 2-bromo[1,10]phenanthroline

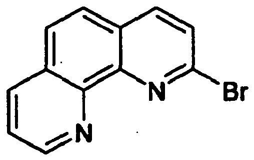

This was prepared according to the literature from 1-methyl-1H-[1,10]phenanthrolin-2-one: S. Ogawa et al.; J. Chem. Soc. Perkin Trans. 1; 1974; 976-978, or alternatively via the following synthetic route:
10.0 ml (0.016 mol) of a 1.6 M solution of butyllithium in hexane was cooled to 0°C and a solution of 0.72 g (0.008 mol) of N,N-dimethylaminoethanol in 10 ml of hexane was added dropwise over a period of 15 minutes. The reaction mixture was cooled to -78°C and a solution of 0.72 g (0.004 mol) of [1,10]phenanthroline in 5 ml of hexane was subsequently added dropwise. After one hour, a solution of 3.32 g (0.010 mol) of CBr₄ in 25 ml of THE was added. After one hour at - 78°C, the reaction mixture was admixed with 20 ml of a 10% strength aqueous HCl solution. The aqueous phase was extracted twice with 20 ml of diethyl ether. The combined organic phases were dried over MgSO₄, filtered and the solvent was distilled off at reduced pressure. Column chromatography (eluent: ethyl acetate/hexane) gave 0.78 g (0.003 mol) of the product in a yield of 75%.

### 1.3. Preparation of 1-[1,10]phenanthrolin-2-ylethanone

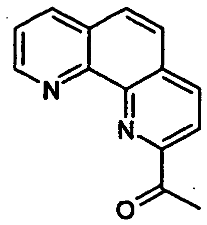

54.67 g (0.211 mol) of 2-bromo[1,10]phenanthroline were dissolved in 650 ml of diethyl ether and cooled to -70°C. 145.1 ml (0.232 mol) of a 1.6 M solution of butyllithium in hexane were added dropwise over a period of 15 minutes. The temperature rose to -40°C and the mixture was stirred for another 15 minutes. The mixture was cooled to -60°C and 27.58 g (0.317 mol) of N,N-dimethylacetamide were added dropwise, after which the mixture was stirred at room temperature for another one hour. The reaction mixture was stirred with 300 ml of a saturated ammonium chloride solution. The aqueous phase was extracted twice with 20 ml of diethyl ether. The combined organic phases were dried over Na₂SO₄, filtered and the solvent was distilled off under reduced pressure. This gave 44.55 g (0.201 mol) of [1,10]phenanthrolin-2-ylethanone in a yield of 95%.

### 1.4. Preparation of (2-chloro-4,6-dimethylphenyl)(1-[1,10]phenanthrolin-2-ylethylidene)amine

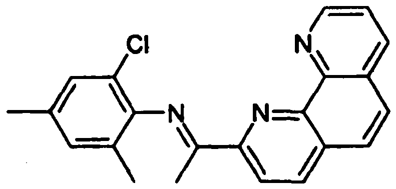

44.55 g (0.201 mol) of 1-[1,10]phenanthrolin-2-ylethanone, 53.18 g (0.342 mol) of 2,4-dimethyl-6-chloroaniline and 40 g of Sicapent were refluxed in 1000 ml of tetrahydrofuran for 7.5 hours. After cooling, the insoluble solid was filtered off and washed with tetrahydrofuran. The solvent was distilled off from the filtrate obtained in this way, the residue was admixed with 400 ml of methanol and subsequently stirred at 55°C for 1 hour. The suspension formed in this way was filtered and the solid obtained was washed with methanol and freed of the solvent The product obtained in this way was filtered off and washed with methanol. The product was taken up in 600 ml of methanol, stirred for one hour, filtered off and washed with ether. This gave 39.78 g (0.111 mol) of (2-chloro-4,6-dimethylphenyl)(1-(1,10]phenanthrolin-2-ylethylidene)amine in a yield of 55%.

### 1.5. Preparation of complex 1

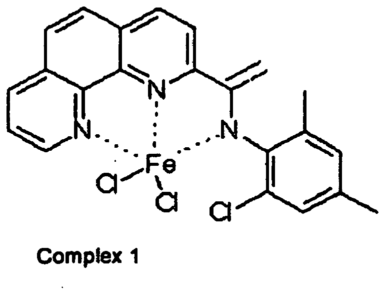

A solution of lithium diisopropylamide in tetrahydrofuran (2M/THF, 5.5 ml, 0.011 mol) is slowly added dropwise to a solution of 3.98 g (0.011 mol) of (2-chloro-4,6-dimethylphenyl)-(1-[1,10]phenanthrolin-2-ylethylidene)amine in 100 ml of THF at-30°C. After stirring at room temperature for one hour, a solution of 1.78 g of FeCl₃ (0.011 mol) dissolved in 100 ml of diethyl ether is added at room temperature. The reaction mixture is stirred for 12 hours and the solvent is subsequently distilled off. The residue is washed twice with ether and then dried under reduced pressure. The residue is taken up in methylene chloride and the solution obtained in this way is filtered. The residue is freed of the solvent, washed with pentane and freed of solvent residues under reduced pressure.

### Comparative example C1

### 2,6-bis[1-(2-Chloro-4,6-dimethylphenylimino)ethyl]pyridineiron(II) chloride was prepared as described by Lutz et al., C.R. Chimie 5 (2002), pp. 43-48.

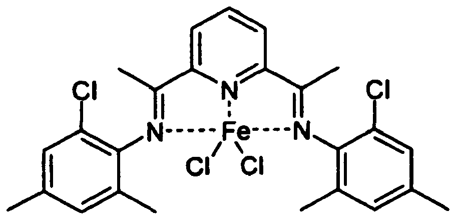

### Polymerization

The polymerization experiments were carried out in a 1 l four-necked flask provided with contact thermometer, Teflon blade stirrer, gas inlet tube, condenser and heating mantle. 250 ml of toluene were placed in this flask and the appropriate amounts of the complex (see table 1) were added at 40°C under argon. The solution was subsequently heated at 75°C for 10 minutes. It was then cooled back down to 40°C and the amount indicated in table 1 of 30% methylaluminoxane solution (MAO) in toluene from Crompton was added. 20-40 l/h of ethylene were then passed through the solution.

To end the polymerization, the introduction of ethylene was stopped and argon was passed through the solution. A mixture of 15 ml of concentrated hydrochloric acid and 50 ml of methanol was then added and after stirring for 15 minutes a further 250 ml of methanol was added, resulting in complete precipitation of the polymer formed. The polymer was filtered off via a glass frit filter, washed three times with methanol and dried at 70°C under reduced pressure. Table 1 summarizes the polymerization and product data.

**Table 1**

| Ex. | Complex from Ex. | Amount of complex [µmol] | Complex: Al | t(poly) [min] | Polymer [g] | Activity [g PE/ (mmol-h] | η [dl/g] | M_{w} [g/mol] | M_{w}/Mₙ |
|---|---|---|---|---|---|---|---|---|---|
| 2 | 1 | 10.0 | 1:500 | 20 | | >2000 | | | |
| 3 | C1 | 22.0 | 1:500 | 15 | 10.44 | 1901 | 0.523 | 23150 | 8.5 |

The determination of the molar mass distributions and the averages Mn, Mw and Mw/Mn derived therefrom was carried out by means of high-temperature gel permeation chromatography using a method based on DIN 55672-1:1995-02, February 1995 edition. The deviations from the cited DIN standard are as follows: solvent: 1,2,4-trichlorobenzene (TCB), temperature of the instrument and the solutions: 135°C, and concentration detector: PolymerChar (Valencia, Patema 46980, Spain) IR-4 infrared detector which is used with TCB. A WATERS Alliance 2000 with the following columns connected in series: 3x SHODEX UT 806 M, 1x SHODEX UT 807 was used. The solvent was distilled under nitrogen and stabilized with 0.025% by weight of 2,6-di-tert-butyl-4-methylphenol. The flow was 1 ml/min, the injection volume was 500 µl and the polymer concentration was in the range from 0.01% by weight to 0.05% by weight. The calibration of the molecular weights was effected by means of monodisperse Polystyrene (PS) Standards from Polymer Laboratories (now Varian, Inc., Essex Road, Church Stretton, Shropshire, SY6 6AX, UK) in the range from 580 g/mol to 11600000 g/mol and also hexadecane. The calibration curve was then fitted by means of the universal calibration method (Benoit H., Rempp P. and Grubisic Z. & in J. Polymer Sci., Phys. Ed., 5, 753(1967)) to polyethylene (PE). The Mark-Houwing parameters used were for PS: kpₛ = 0.000121 dl/g, α_{PS} = 0.706, and for PE k_{PE} = 0.000406 dl/g, a_{PE} = 0.725, in TCB and at 135°C. Data recording and calculation were carried out using NTGPC_Control_V6.02.03 and NTGPC_V6.4.24 (hs GmbH, Hauptstraße 36, D-55437 Ober-Hilbersheim).

The Staudinger index (η)[dl/g] was determined at 130°C by means of an automatic Ubbelohde viscometer (Lauda PVS 1) using decalin as solvent (ISO1628 at 130°C, 0.001 g/ml of decalin).

## Claims

1. A complex of the formula la 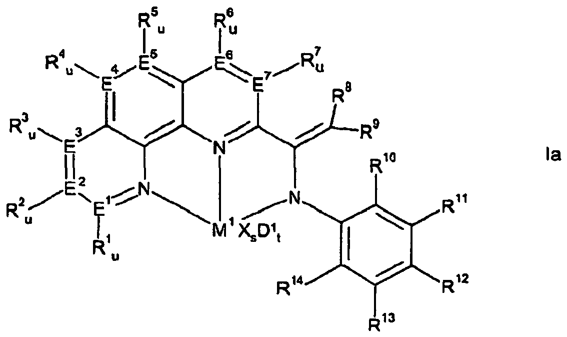 where the variables have the following meanings:
M¹ is Fe, Co or Ni,
R¹-R¹⁴ are each, independently of one another, hydrogen, C₁-C₂₂-alkyl. C₂-C₂₂-alkenyl, C₆-C₂₂-aryl, arylalkyl having from 1 to 10 carbon atoms in the alkyl radical and 6-20 carbon atoms in the aryl radical, NR¹⁵₂, OR¹⁵, halogen or SiR¹⁶₃, where the organic radicals R¹-R¹⁴ may also be substituted by halogens and two adjacent radicals R¹-R¹⁴ may also be joined to form a five- or six-membered ring,
the radicals R¹⁵ are each, independently of one another, hydrogen, C₁-C₂₂-alkyl, C₂-C₂₂-alkenyl, C₆-C₂₂-aryl, arylalkyl having from 1 to 10 carbon atoms in the alkyl radical and 6-20 carbon atoms in the aryl radical or SiR¹⁶_{3,} where the organic radicals R¹⁵ may also be substituted by halogens and two radicals R¹⁵ may also be joined to form a five- or six-membered ring,
the radicals R¹⁸ are each, independently of one another, hydrogen, C₁-C₂₂₋alkyl, C₂-C₂₂-alkenyl, C₆-C₂₂-aryl or arylalkyl having from 1 to 10 carbon atoms in the alkyl radical and 6-20 carbon atoms in the aryl radical and two radicals R¹⁶ may also be joined to form a five- or six-membered ring,
E¹-E⁷ are each, independently of one another, carbon or nitrogen and
u is 0 when E¹-E⁷ is nitrogen and is 1 when E¹-E⁷ is carbon,
the radicals X are each, independently of one another, fluorine, chlorine, bromine, iodine, hydrogen, C₁-C₁₀-alkyl, C₂-C₁₀-alkenyl, C₆-C₂₀-aryl, arylalkyl having from 1-10 carbon atoms in the alkyl radical and 6-20 carbon atoms in the aryl radical, NR¹⁷₂, OR¹⁷, SR¹⁷, SO₃R¹⁷, OC(O)R¹⁷, CN, SCN, β-diketonate, CO, BF₄⁻, PF₆⁻ or a bulky noncoordinating anion, where the radicals X may be joined to one another,
the radicals R¹⁷ are each, independently of one another, hydrogen, C₁-C₂₂-alkyl, C₂-C₂₂-alkenyl, C₆-C₂₂₋aryl, arylalkyl having from 1 to 10 carbon atoms in the alkyl radical and 6-20 carbon atoms in the aryl radical or SiR¹⁸₃, where the organic radicals R¹⁷ may also be substituted by halogens and two radicals R¹⁷ may also be joined to form a five- or six-membered ring,
the radicals R¹⁸ are each, independently of one another, hydrogen, C₁-C₂₂-alkyl, C₂C₂₂-alkenyl, C₆-C₂₂-aryl, arylalkyl having from 1 to 10 carbon atoms in the alkyl radical and 6-20 carbon atoms in the aryl radical, where the organic radicals R¹⁸ may also be substituted by halogens and two radicals R¹⁸ may also be joined to form a five- or six-membered ring,
D¹ is an uncharged donor and
s is 1 or 2,
t is from 0 to 4.

2. The complex of the formula la, according to claim 1, wherein E¹-E⁷ are each carbon.

3. The complex of the formula la according to claim 1 or 2, wherein R¹⁰ and R¹⁴ are each, independently of one another, C₁-C₂₀-alkyl, CF₃, chlorine or bromine.

4. The complex of the formula la according to any of claims 1 to 3, wherein R¹¹ and R¹³ are each hydrogen.

5. The complex of the formula la according to any of claims 1 to 4, wherein M¹ is Fe.

6. A catalyst system for olefin polymerization comprising at least one complex of the formula Ia according to claims 1-5, optionally an organic or inorganic support, optionally one or more activators, optionally further catalysts suitable for olefin polymerization and optionally one or more metal compounds from group 1, 2 or 13 of the Periodic Table.

7. The use of a catalyst system according to claim 6 for the polymerization or copolymerization of olefins.

8. A process for preparing polyolefins by Polymerization or copolymerization of olefins in the presence of a catalyst system according to claim 6.

9. A process for preparing polyolefins by polymerization or copolymerization of olefins in the presence of a catalyst system according to claim 6, wherein the polymerization is carried out in the presence of hydrogen.

## Patentansprüche

1. Komplex der Formel Ia 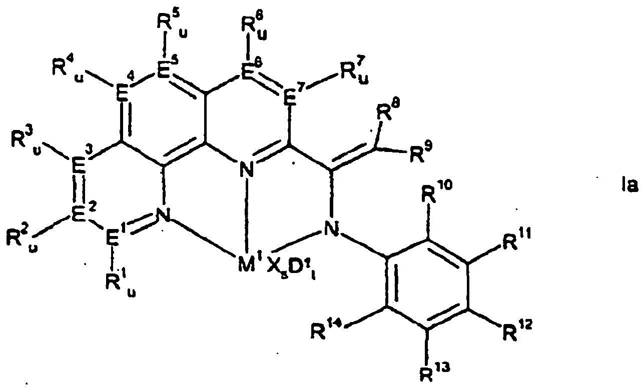 wo die Variablen jeweils die folgende Bedeutung haben:
M¹ steht für Fe, Co oder Ni,
R¹-R¹⁴ sind jeweils, unabhängig voneinander, Wasserstoff, C₁-C₂₂-Alkyl, C₂-C₂₂-Alkenyl, C₆-C₂₂-Aryl, Arylalkyl mit 1 bis 10 Kohlenstoffatomen in dem Alkylrest und 6-20 Kohlenstoffatomen in dem Arylrest, NR¹⁵₂, OR¹⁵, Halogen oder SiR¹⁶₃, wobei die organischen Reste R¹-R¹⁴ auch durch Halogene substituiert sein können und zwei benachbarte Reste R¹-R¹⁴ auch zu einem fünf- oder sechsgliedrigen Ring verbunden sein können,
die Reste R¹⁵ sind jeweils, unabhängig voneinander, Wasserstoff, C₁-C₂₂-Alkyl, C₂-C₂₂-Alkenyl, C₆-C₂₂-Aryl, Arylalkyl mit 1 bis 10 Kohlenstoffatomen in dem Alkylrest und 6-20 Kohlenstoffatomen in dem Arylrest oder SiR¹⁶₃, wobei die organischen Reste R¹⁵ auch durch Halogene substituiert sein können und zwei Reste R¹⁵ auch zu einem fünf- oder sechsgliedrigen Ring verbunden sein können,
die Reste R¹⁶ sind jeweils, unabhängig voneinander, Wasserstoff, C₁-C₂₂-Alkyl, C₂-C₂₂-Alkenyl, C₆-C₂₂-Aryl oder Arylalkyl mit 1 bis 10 Kohlenstoffatomen in dem Alkylrest und 6-20 Kohlenstoffatomen in dem Arylrest und zwei Reste R¹⁶ können auch zu einem fünf- oder sechsgliedrigen Ring verbunden sein,
E¹-E⁷ sind jeweils, unabhängig voneinander, Kohlenstoff oder Stickstoff und
u ist 0, wenn E¹-E⁷ Stickstoff ist und ist 1, wenn E¹_E⁷ Kohlenstoff ist,
die Reste X sind jeweils, unabhängig voneinander, Fluor, Chlor, Brom, Iod, Wasserstoff, C₁-C₁₀-Alkyl, C₂-C₁₀-Akenyl, C₆-C₂₀-Aryl, Arylalkyl mit 1-10 Kohlenstoffatomen in dem Alkylrest und 6-20 Kohlenstoffatomen in dem Arylrest, NR¹⁷₂, OR¹⁷, SR¹⁷, SO₃R¹⁷, OC(O)R¹⁷, CN, SCN, β-Diketonat, CO, BF₄⁻, PF₆⁻ oder ein großes nichtkoordinierendes Anion, wobei die Reste X miteinander verbunden sein können,
die Reste R¹⁷ sind jeweils, unabhängig voneinander, Wasserstoff, C₁-C₂₂-Alkyl, C₂-C₂₂-Alkenyl, C₆-C₂₂-Aryl, Arylalkyl mit 1 bis 10 Kohlenstoffatomen in dem Alkylrest und 6-20 Kohlenstoffatomen in dem Arylrest oder SiR¹⁸₃, wobei die organischen Reste R¹⁷ auch durch Halogene substituiert sein können und zwei Reste R¹⁷ auch zu einem fünf- oder sechsgliedrigen Ring verbunden sein können,
die Reste R¹⁸ sind jeweils, unabhängig voneinander, Wasserstoff, C₁-C₂₂-Alkyl, C₂-C₂₂-Alkenyl, C₆-C₂₂-Aryl, Arylalkyl mit 1 bis 10 Kohlenstoffatomen in dem Alkylrest und 6-20 Kohlenstoffatomen in dem Arylrest, wobei die organischen Reste R¹⁸ auch durch Halogene substituiert sein können und zwei Reste R¹⁸ auch zu einem fünf- oder sechsgliedrigen Ring verbunden sein können,
D¹ ist ein ungeladener Donator und
s ist 1 oder 2,
t ist von 0 bis 4.

2. Komplex der Formel Ia nach Anspruch 1, wobei E¹-E⁷ jeweils Kohlenstoff sind.

3. Komplex der Formel Ia nach Anspruch 1 oder 2, wobei R¹⁰ und R¹⁴ jeweils, unabhängig voneinander, C₁-C₂₀-Alkyl, CF₃, Chlor oder Brom sind.

4. Komplex der Formel Ia nach einem der Ansprüche 1 bis 3, wobei R¹¹ und R¹³ jeweils Wasserstoff sind.

5. Komplex der Formel Ia nach einem der Ansprüche 1 bis 4, wobei M¹ für Fe steht.

6. Katalysatorsystem zur Olefinpolymerisation mit mindestens einem Komplex der Formel Ia nach den Ansprüchen 1-5, optional mit einem organischen oder anorganischen Träger, optional mit einem oder mehreren Aktivatoren, optional mit weiteren für die Olefinpolymerisation geeigneten Katalysatoren und optional mit einer oder mehreren Metallverbindungen aus Gruppe 1, 2 oder 13 des Periodensystems.

7. Verwendung eines Katalysatorsystems nach Anspruch 6 für die Polymerisation oder Copolymerisation von Olefinen.

8. Verfahren zur Herstellung von Polyolefinen durch Polymerisation oder Copolymerisation von Olefinen in Gegenwart eines Katalysatorsystems nach Anspruch 6.

9. Verfahren zur Herstellung von Polyolefinen durch Polymerisation oder Copolymerisation von Olefinen in Gegenwart eines Katalysatorsystems nach Anspruch 6, wobei die Polymerisation in Gegenwart von Wasserstoff durchgeführt wird.

## Revendications

1. Complexe de formule Ia 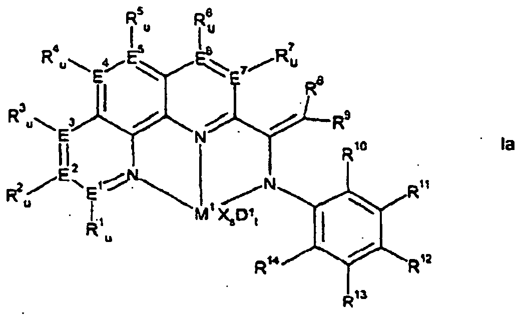 où les variables ont les significations suivantes :
M¹ représente Fe, Co ou Ni,
R¹-R¹⁴ représentent chacun, indépendamment l'un de l'autre, hydrogène, C₁-C₂₂-alkyle, C₂-C₂₂-alcényle, C₆-C₂₂-aryle, arylalkyle comprenant 1 à 10 atomes de carbone dans le radical alkyle et 6-20 atomes de carbone dans le radical aryle, NR¹⁵₂, halogène ou SiR¹⁶₃, où les radicaux organiques R¹-R¹⁴ peuvent aussi être substitués par des halogènes et deux radicaux adjacents R¹-R¹⁴ peuvent aussi être liés pour former un cycle à cinq ou six chaînons,
les radicaux R¹⁵ représentent chacun, indépendamment l'un de l'autre, hydrogène, C₁-C₂₂-alkyle, C₂-C₂₂-alcényle, C₆-C₂₂-aryle, arylalkyle comprenant 1 à 10 atomes de carbone dans le radical alkyle et 6-20 atomes de carbone dans le radical aryle ou SiR¹⁶₃, où les radicaux organiques R¹⁵ peuvent aussi être substitués par des halogènes et deux radicaux R¹⁵ peuvent aussi être liés pour former un cycle à cinq ou six chaînons,
les radicaux R¹⁶ représentent chacun, indépendamment l'un de l'autre, hydrogène, C₁-C₂₂-alkyle, C₂-C₂₂- alcényle, C₆-C₂₂-aryle ou arylalkyle comprenant 1 à 10 atomes de carbone dans le radical alkyle et 6-20 atomes de carbone dans le radical aryle et deux radicaux R¹⁶ peuvent aussi être liés pour former un cycle de cinq ou six chaînons,
E¹-E⁷ représentent chacun, indépendamment l'un de l'autre, carbone ou azote et
u vaut 0 lorsque E¹-E⁷ représentent azote et vaut 1 lorsque E¹-E⁷ représentent carbone,
les radicaux X représentent chacun, indépendamment l'un de l'autre, fluor, chlore, brome, iode, hydrogène, un radical C₁-C₁₀-alkyle, C₂-C₁₀-alcényle, C₆-C₂₀-aryle, arylalkyle comprenant 1-10 atomes de carbone dans le radical alkyle et 6-20 atomes de carbone dans le radical aryle, NR¹⁷₂, OR¹⁷, SR¹⁷, SO₃R¹⁷, OC(O)R¹⁷, CN, SCN, β-dicétonae, CO, BF₄⁻ , PF₆⁻ ou un anion non coordinant volumineux, où les radicaux X peuvent être liés l'un à l'autre,
les radicaux R¹⁷ représentent chacun, indépendamment l'un de l'autre, hydrogène, C₁-C₂₂-alkyle, C₂-C₂₂-alcényle, C₆-C₂₂-aryle, arylalkyle comprenant 1 à 10 atomes de carbone dans le radical alkyle et 6-20 atomes de carbone dans le radical aryle ou SiR¹⁸₃, où les radicaux organiques R¹⁷ peuvent aussi être substitués par des halogènes et deux radicaux R¹⁷ peuvent aussi être liés pour former un cycle à cinq ou six chaînons,
les radicaux R¹⁸ représentent chacun, indépendamment l'un de l'autre, hydrogène, C₁-C₂₂-alkyle, C₂-C₂₂-alcényle, C₆-C₂₂-aryle, arylalkyle comprenant 1 à 10 atomes de carbone dans le radical alkyle et 6-20 atomes de carbone dans le radical aryle, où les radicaux organiques R¹⁸ peuvent aussi être substitués par des halogènes et deux radicaux R¹⁸ peuvent aussi être liés pour former un cycle à cinq ou six chaînons,
D¹ représente un donneur non chargé et
s vaut 1 ou 2,
t vaut de 0 à 4.

2. Complexe de formule Ia, selon la revendication 1, où E¹-E⁷ représentent chacun carbone.

3. Complexe de formule Ia selon la revendication 1 ou 2, où R¹⁰ et R¹⁴ représentent chacun, indépendamment l'un de l'autre, C₁-C₂₀-alkyle, CF₃, chlore ou brome.

4. Complexe de formule Ia selon l'une quelconque des revendications 1 à 3, où R¹¹ et R¹³ représentent chacun hydrogène.

5. Complexe de formule Ia selon l'une quelconque des revendications 1 à 4, où M¹ représente Fe.

6. Système de catalyseur pour la polymérisation d'oléfines comprenant au moins un complexe de formule Ia selon les revendications 1-5, éventuellement un support organique ou inorganique, éventuellement un ou plusieurs activateurs, éventuellement d'autres catalyseurs appropriés pour la polymérisation d'oléfines et éventuellement un ou plusieurs composés métalliques du groupe 1, 2 ou 13 du tableau périodique.

7. Utilisation d'un système de catalyseur selon la revendication 6 pour la polymérisation ou la copolymérisation d'oléfines.

8. Procédé de préparation de polyoléfines par polymérisation ou copolymérisation d'oléfines en présence d'un système de catalyseur selon la revendication 6.

9. Procédé de préparation de polyoléfines par polymérisation ou copolymérisation d'oléfines en présence d'un système de catalyseur selon la revendication 6, où la polymérisation est réalisée en présence d'hydrogène.
